# EUROPÄISCHE PATENTSCHRIFT

(11) **EP 3 989 699 B1**
(45) Veröffentlichungstag und Bekanntmachung des Hinweises auf die Patenterteilung: **04.09.2024**
(21) Anmeldenummer: 20739253.1
(22) Anmeldetag: 24.06.2020
(51) Int. Cl.: A01C 5/06, A01C 7/04, A01C 7/20

(54) **LANDWIRTSCHAFTLICHE SÄMASCHINE MIT EINER AUF EINER ANDRUCKROLLE ABGESTÜTZTEN SAATGUTVEREINZELUNGSVORRICHTUNG**
AGRICULTURAL SOWING MACHINE WITH A SEED METERING DEVICE SUPPORTED ON A PRESS WHEEL
SEMOIR AGRICOLE COMPORTANT UN DISPOSITIF DE DOSAGE DE SEMENCES SUPPORTÉ SUR UNE ROUE DE PRESSE

(30) Priorität: 26.06.2019 DE 102019117243
(43) Veröffentlichungstag der Anmeldung: 04.05.2022
(73) Patentinhaber: Lemken GmbH & Co KG, 46519 Alpen (DE)
(72) Erfinder: DIEPERS, Clemens, 47647 Aldekerk (DE)
(86) Internationale Anmeldenummer: PCT/DE2020/100537
(87) Internationale Veröffentlichungsnummer: WO 2020/259759

(56) Entgegenhaltungen:
- DE-A1- 102015 105 769
- DE-A1- 102015 114 362
- US-A- 4 043 281

## Beschreibung

Die vorliegende Erfindung bezieht sich auf eine landwirtschaftliche Sämaschine mit einem Maschinenrahmen und einer Mehrzahl von nebeneinander am Maschinenrahmen angeordneten Saatgutvereinzelungsvorrichtungen und Drilleinheiten, wobei die Drilleinheiten zumindest einen Furchenöffner, eine Förderleitung zur Beförderung des Saatguts von der Saatgutvereinzelungsvorrichtung zu einer Ablagezone mit einer bodennah angeordneten Abgabeöffnung und eine Andruckrolle aufweisen, und der zumindest eine Furchenöffner, die Abgabeöffnung und die Andruckrolle in dieser Arbeitsabfolge zueinander in der Drilleinheit angeordnet sind.

Aus der Schrift US 5,603,269 ist eine Sämaschine bekannt, bei der die Saatgutvereinzelungsvorrichtung starr mit dem Maschinenrahmen verbunden ist. Da die Drilleinheiten beweglich am Maschinenrahmen befestigt sind, können sie Unebenheiten des Bodens, die sie während der Arbeit der Sämaschine überfahren, in vertikaler Richtung folgen und auch bei einem Fremdkörperkontakt nach oben hin ausweichen. Wegen der fehlenden Koppelung mit den Drilleinheiten übertragen sich die kontinuierlichen Höhenbewegungen der Drilleinheiten nicht auf die Saatgutvereinzelungsvorrichtung. Da sie deshalb während des Betriebs der Sämaschine weniger von Stößen erschüttert wird, bleibt die Vereinzelung in der Saatgutvereinzelungsvorrichtung vergleichsweise genau. Als Nachteil hat sich aber erwiesen, dass die Förderleitungen sehr lang ausgebildet sein müssen, um die Bewegungen zwischen den Drilleinheiten und der Saatgutvereinzelungsvorrichtung ausgleichen zu können. Aus den langen Förderleitungen und deren Bewegungen ergeben sich Laufwegdifferenzen des Saatguts, die zu einer ungenauen Saatgutablage führen. Auch verformt sich die Förderleitung ständig, was ebenfalls das Ablageergebnis beeinträchtigt.

In der Schrift US 4,074,830 ist eine andere Sämaschine offenbart, in der die Saatgutvereinzelungsvorrichtung starr mit der Drilleinheit verbunden ist. Die Förderleitung zwischen der Saatgutvereinzelungsvorrichtung und der Drilleinheit kann kürzer ausgeführt werden. Durch die ständigen Vertikalbewegungen der zugehörigen Drilleinheit ist die Saatgutvereinzelungsvorrichtung allerdings ständigen Stößen und Schlägen ausgesetzt, die zu Fehlern bei der Saatgutvereinzelung in der Saatgutvereinzelungsvorrichtung und damit Fehlstellen von Saatgutkörnern in der ausgelegten Saatgutreihe führen.

In der Schrift WO 2010/059101 A1 ist eine gattungsgemäße Sämaschine offenbart, bei der die Drilleinheit und der Saatgutbehälter mit der daran befestigten Saatgutvereinzelungsvorrichtung beide schwenkbeweglich mit dem Maschinenrahmen verbunden sind. Allerdings sind dabei Säschar und Saatgutvereinzelungsvorrichtung durch eine feste Verbindung miteinander gekoppelt, so dass sie sich bei Vertikalbewegungen des Säschars gleichsinnig und miteinander fest gekoppelt auf- und abwärts bewegen. Auch bei dieser Lösung sind die Förderleitungen kürzer, es werden aber Stöße auf die Saatgutvereinzelungseinrichtung übertragen, was die Vereinzelungs- und Ablagequalität beeinträchtigt. Weitere Sämaschinen sind aus der DE 10 2015 114362 A1, der DE 10 2015 105 769 A1 und der US 4 043 281 A bekannt.

Insgesamt stellt sich bei den aus dem Stand der Technik bekannten Lösungen das Problem, dass die aus der Abgabeöffnung austretenden Saatgutkörner möglichst genau auf einen Punkt auf, an oder vor die Andruckrolle geschossen werden sollen, um Fehlablagen in der Saatgutreihe zu vermeiden. Wenn sich die Saatgutvereinzelungsvorrichtung und das Säschar relativ zueinander bewegen, verändert sich die relative Lage der Förderleitung mit ihrer Abgabeöffnung im Verhältnis zur Andruckrolle, woraus sich unterschiedliche Auftreffpunkte des Saatgutes auf, an, vor oder auch neben der Andruckrolle ergeben.

Es ist die Aufgabe der vorliegenden Erfindung, die Ablagegenauigkeit zu erhöhen und die Zahl der Fehlstellen in der Reihe des gelegten Saatguts zu verringern. Die Stöße, die auf die Saatgutverteilvorrichtung einwirken, sollen gering gehalten werden. Außerdem sollen die Saatgutkörner auch bei höheren Geschwindigkeiten abgelegt werden können.

Die Aufgabe wird durch eine Sämaschine gemäß Anspruch 1 gelöst, indem die Andruckrolle über Lenkerarme mit dem Maschinenrahmen und/oder Rahmenteilen des Furchenöffners und/oder Lenkerarmen zur Führung des Furchenöffners so verbunden ist, dass diese vom Furchenöffner unabhängig höhenbeweglich ist, und die Saatgutvereinzelungsvorrichtung zumindest teilweise oder vollständig direkt auf der Andruckrolle abgestützt ist.

Indem die Andruckrolle über Lenkerarme mit dem Maschinenrahmen und/oder Rahmenteilen des Furchenöffners und/oder Lenkerarmen zur Führung des Furchenöffners so verbunden ist, dass diese vom Furchenöffner unabhängig höhenbeweglich ist, kann sich diese leichter an Höhenunterschiede in der Säfurche anpassen. Die Andruckrolle kann sich unabhängig von dem Furchenöffner nach oben und unten bewegen und muss dabei auch keine Höhenführungsfunktionen für den Furchenöffner ausfüllen. Dadurch wirken geringere Massenträgheitsmomente auf die Andruckrolle ein, wenn diese ihre Höhenlage an Höhenveränderungen in der Säfurche anpasst. Höhenanpassungen werden dadurch schneller und leichter möglich. Indem die Andruckrolle genauer dem Höhenverlauf der Säfurche zu folgen vermag, verbessert sich auch die Ablagequalität der ausgebrachten Saatgutkörner. Auch die Höhenführung des Furchenöffners ist dadurch verbessert, weil dessen jeweilige Höhenlage nicht mehr von Bewegungen der Andruckrolle beeinflusst wird. Durch die unabhängige Beweglichkeit beeinträchtigt der Furchenöffner nicht mehr die Vereinzelung der Saatgutkörner in der Saatgutvereinzelungsvorrichtung. Bei der technischen Auslegung des Halterahmens des Furchenöffners und der Bestimmung der Parameter für die Beweglichkeit des Furchenöffners muss nun auch keine Rücksicht mehr auf die Saatgutvereinzelungsvorrichtung und die Förderleitung genommen werden.

Der Vorteil, das Gewicht der Saatgutvereinzelungsvorrichtung zumindest teilweise auf der Andruckrolle abzustützen, ist darin zu sehen, dass die Andruckrolle in der bereits geöffneten Säfurche viel ruhiger läuft als der Furchenöffner über den Boden. Während der Furchenöffner bei der Vorfahrt der Sämaschine noch den Boden aufreißen muss und dabei von Unebenheiten des Bodens, Steinen, Biomasse und dergleichen in vertikaler Richtung auf- und abwärts bewegt wird, läuft die Andruckrolle viel ruhiger durch die fertig geöffnete Säfurche, die viel geringere Höhenunterschiede in Fahrtrichtung aufweist als der ungeöffnete Ackerboden. Auf eine auf einem Furchenöffner abgestützte Saatgutvereinzelungsvorrichtung werden alle Auf- und Abwärtsbewegungen des Furchenöffners übertragen, so dass diese erheblichen Erschütterungen, Stößen und Schlägen ausgesetzt ist. Im Gegensatz dazu behält die Andruckrolle ihr Arbeitsniveau bei der Vorfahrt der Sämaschine über ein Feld nahezu unverändert bei, weil der Furchenöffner zunächst noch in der Nähe der Bodenoberfläche befindliche Steine bereits entweder zur Seite befördert oder tiefer in den Boden hineingedrückt hat und diese den ruhigen Lauf der Andruckrolle nicht mehr stören können. Genauso räumt der Furchenöffner auf dem Ackerboden liegende Biomasse beiseite, und Unebenheiten auf der Oberfläche des Ackerbodens spielen für die Andruckrolle keine Rolle mehr, weil sie nicht über den Boden, sondern den Horizont der geöffneten Säfurche bewegt wird.

Mit der direkten Abstützung ist gemeint, dass das Gewicht der Saatgutvereinzelungsvorrichtung nicht indirekt über den Maschinenrahmen ganz oder teilweise auf die Andruckrolle übertragen wird, sondern Maschinenelemente vorhanden sind, über die sich die Saatgutvereinzelungsvorrichtung auf der Andruckrolle abstützt. Die Maschinenelemente können ihrerseits mit dem Maschinenrahmen verbunden sein, und sie können ein- oder mehrteilig, starr, gelenkig oder teleskopierbar, fest oder flexibel ausgebildet sein, wobei aber immer zumindest auch die Saatgutvereinzelungsvorrichtung über die Maschinenelemente auf der Andruckrolle abgestützt ist.

Weil bei der erfindungsgemäßen Ausgestaltung die Saatgutvereinzelungsvorrichtung auf der Andruckrolle abgestützt ist, werden Stoßbewegungen in vertikaler Richtung, die das Säschar ausführt, nicht mehr auf die Saatgutvereinzelungsvorrichtung übertragen. Die Saatgutkörner werden genauer und störungsfreier vereinzelt und abgefördert. Die Saatgutvereinzelungsvorrichtung kann dadurch auch unter günstigeren Betriebsbedingungen betrieben werden, was sich positiv auf die Vereinzelungsqualität auswirkt.

Die zumindest teilweise oder vollständige Abstützung des Gewichts der Saatgutvereinzelungsvorrichtung auf der Andruckrolle hat den weiteren Vorteil, dass die Andruckrolle und die Saatgutvereinzelungsvorrichtung in einem definierten räumlichen Verhältnis zueinander stehen, insbesondere, wenn ein Stützelement als ein Maschinenelement die Saatgutvereinzelungsvorrichtung und die Andruckrolle direkt miteinander verbindet. Da die Relativbewegungen zwischen der Saatgutvereinzelungsvorrichtung und der Andruckrolle in vertikaler Richtung durch ein Stützelement zumindest erheblich reduziert, wenn nicht sogar vollständig unterbunden werden, ist es möglich, die Förderleitung zur Beförderung des Saatguts kürzer auszugestalten, weil sie keine größeren und schwankenden Abstandsdifferenzen mehr ausgleichen muss. Durch die kürzere Förderleitung werden Ablagefehler vermieden, die aus Bewegungen einer zu langen Förderleitung resultieren.

Durch die geringeren oder ganz vermiedenen Relativbewegungen zwischen der Saatgutvereinzelungsvorrichtung und der Andruckrolle kann die Abgabeöffnung auch genauer auf die Andruckrolle ausgerichtet und präziser in dieser Position gehalten werden. Je weniger Relativbewegungen zwischen der Saatgutvereinzelungsvorrichtung und der Andruckrolle bei der Arbeit auftreten, umso genauer kann das Saatgut durch die Abgabeöffnung vor, an oder gegen die Andruckrolle mit einer hohen Wiederholgenauigkeit geschossen werden. Je geringer die Abweichungen zwischen verschiedenen Auftreffpunkten ausfallen, umso weniger Fehler treten bei der Ablage des Saatgutes auf und umso mehr kann die Fahrgeschwindigkeit gesteigert werden, mit der das Saatgut ausgebracht wird.

Die Saatgutvereinzelungsvorrichtung kann beweglich am Maschinenrahmen angeordnet sein. Die Saatgutvereinzelungsvorrichtung kann auch ein Bestandteil einer Bauteilgruppe sein, die andere Funktionsbauteile einer Sämaschine enthält. Die die Saatgutvereinzelungsvorrichtung enthaltende Bauteilgruppe kann dann zusammen mit der Saatgutvereinzelungsvorrichtung beweglich mit dem Maschinenrahmen verbunden sein.

Wenn in dieser Beschreibung von einer Drilleinheit die Rede ist, so muss diese nicht zwingend als eine einzige Baugruppe ausgebildet sein. Der Begriff ist funktional und als Sammelbegriff für die Kernkomponenten mit den Maschinenteilen Furchenöffner, Förderleitung und Andruckrolle zu verstehen, mit denen die Säfurche aufgerissen und danach die Saatgutkörner in die Säfurche eingelegt und darin angedrückt werden. Es können noch zusätzliche Maschinenteile diesen Kernkomponenten vor- und/oder nachgeordnet sein, die Hilfsfunktionen ausführen, wie Räder zur Höhenführung, Zustreichbleche oder -walzen, Stellelemente, Rahmenteile, Antriebe und dergleichen. Die zur Drilleinheit gehörenden Maschinenteile können auch jedes für sich mit dem Maschinenrahmen verbunden sein, oder ein Maschinenteil ist für sich in der Sämaschine angeordnet und die anderen Maschinenteile bilden eine Baugruppe. Die Kernkomponenten der Drilleinheit können jeweils für sich, teilweise miteinander kombiniert oder gemeinsam in einem Rahmen beweglich mit dem Maschinenrahmen verbunden sein.

Gleichwirkend und austauschbar zu einer Andruckrolle ist auch ein Streichblech oder ein vergleichbares Maschinenelement, mit dem das aus der Förderleitung ausgeschossene Saatgut in den Boden gedrückt wird. Die Drilleinheit kann so ausgestaltet sein, dass der Furchenöffner und die Andruckrolle in einem gemeinsamen starren oder beweglichen Rahmen gehalten sind, der Furchenöffner und die Andruckrolle können aber auch unabhängig voneinander beweglich mit dem Maschinenrahmen verbunden sein, so dass sich diese unabhängig voneinander oder gelenkig gekoppelt miteinander bewegen können.

Einer Drilleinheit sind mehrere Furchenöffner zugeordnet.

Die Furchenöffner können einzeln oder paarweise angeordnet sein. Die Furchenöffner können als feststehendes Schar oder als eine rotierende Scheibe ausgebildet sein.

Nach einer Ausgestaltung der Erfindung ist dem Furchenöffner eine Tiefenführungsvorrichtung zugeordnet. Da die Tiefenführungsvorrichtung bei dieser Zuordnung nur auf den Furchenöffner wirkt, wird die Andruckrolle nur vom Höhenverlauf des Furchenbodens in der Säfurche höhengesteuert. Dadurch kann die Andruckrolle das Höhenprofil der Säfurche genauer kopieren Die Andruckrolle läuft dabei auch laufruhiger, weil Unebenheiten in der Bodenfläche des benachbarten Ackerbodens, die über die Tiefenführungsvorrichtung auf den Furchenöffner wirken, nicht auf die Andruckrolle übertragen werden.

Nach einer Ausgestaltung der Erfindung ist dem Furchenöffner ein Energiespeicher zur Beaufschlagung mit einer vorzugsweise vertikalen Kraft zugeordnet. Als Energiespeicher kommen insbesondere mechanische Federn oder hydraulische oder pneumatische Kraftspeicher in Betracht. Die Energiespeicher können auch über einen Druckzylinder angesprochen werden, der über eine Druckleitung mit dem vom Druckzylinder entfernt verbauten hydraulischen oder pneumatischen Kraftspeicher verbunden ist. Durch die Energiespeicher, die bei einer Einfederbewegung des Furchenöffners eine Rückstellkraft aufbauen, wird eine Einfederbewegung gedämpft. Bei Wegfall der Kraft, die die Einfederbewegung ausgelöst hat, drückt der Energiespeicher den Furchenöffner wieder zurück in seine neutrale Betriebsstellung. Der Furchenöffner wird dadurch über die Zeit gleichmäßiger in seiner Betriebsstellung gehalten.

Nach einer Ausgestaltung der Erfindung ist der Energiespeicher einstell- oder regelbar ausgebildet. Dadurch kann der Energiespeicher an aktuelle Einsatzbedingungen angepasst werden.

Gemäß
der Erfindung ist die Saatgutvereinzelungsvorrichtung als Doppel- oder Mehrfachvereinzelungsvorrichtung ausgeführt, wobei der Saatgutvereinzelungsvorrichtung zwei oder mehrere Furchenöffner zugeordnet sind. Durch die Mehrfachkombinationen von Saatgutvereinzelungsvorrichtungen mit Furchenöffnern kann die Leistung der Sämaschine gesteigert werden. Insbesondere werden dadurch dicht nebeneinander liegende Doppel- oder Mehrfachsäspuren möglich. Nach einer Ausgestaltung der Erfindung sind die Furchenöffner unabhängig voneinander beweglich am Maschinenrahmen aufgehängt. Bei einer unabhängig voneinander ausgestalteten Beweglichkeit können sich die Furchenöffner noch genauer der Bodenkontur anpassen, die von ihnen bei der Arbeit überfahren wird.

Nach einer Ausgestaltung der Erfindung sind den Furchenöffnern jeweils Andruckrollen zugeordnet, welche über eine gemeinsame Achse und/oder ein gemeinsames Stützelement mit der Saatgutvereinzelungsvorrichtung verbunden sind. Durch die gemeinsame Achse und/oder das gemeinsame Stützelement kann sich eine Koppelung der Vertikalbewegungen der Furchenöffner mit den Andruckrollen ergeben. Diese können beispielsweise sinnvoll sein, wenn es größere Höhenveränderungen in der Bodenkontur gibt. Vertikale Bewegungen der Furchenöffner können dann auf diese Weise auf die Andruckrolle übertragen werden, die sich dann früher aufwärts oder abwärts bewegt, bevor eine solche Bewegung durch den Verlauf des Furchenbodens in der Säfurche vorgegeben wird.

Nach einer Ausgestaltung der Erfindung ist das Stützelement starr ausgebildet. Bei einer starren Verbindung der Saatgutvereinzelungsvorrichtung mit der Andruckrolle bewegen sich beide Maschinenelemente synchron auf- und abwärts. Die größere Masse dämpft die Bewegungen. Die Förderleitung zwischen der Saatgutvereinzelungsvorrichtung und der Andruckrolle muss nicht extra lang oder längenveränderlich ausgeführt werden und behält die Position der Abgabeöffnung im Verhältnis zur Andruckrolle auch bei Auf- und Abwärtsbewegungen dieser Maschinenelemente bei.

Nach einer Ausgestaltung der Erfindung weist das Stützelement ein Feder- und/oder Dämpferelement auf. Ein zwischengeschaltetes Feder- und/oder Dämpferelement kann Kraftspitzen aufnehmen und höhere Stoßbelastungen für die Saatgutvereinzelungsvorrichtung vermeiden helfen. Die Saatgutvereinzelungsvorrichtung kann dadurch noch präziser arbeiten. Auch von dem Förderelement können mit dem Feder- und/oder Dämpferelement Kraftspitzen ferngehalten oder gemindert werden. Der Fachmann kann die Federhärte und Dämpfungskennlinien an seinen Bedarf anpassen.

Nach einer Ausgestaltung der Erfindung ist die Andruckrolle über eine Schwinge, ein Feder- und/oder Dämpferelement und/oder ein längsverstellbares Koppelglied mit dem Maschinenrahmen oder einem ortsfest mit dem Maschinenrahmen verbundenen Bauteil verbunden. Es ist vorteilhaft, die Andruckrolle nicht in einem gemeinsamen Tragrahmen mit dem Furchenöffner anzuordnen, da der Furchenöffner stärkere Auf- und Abwärtsbewegungen bei der Fahrt über einen Acker macht und sich diese bei einer gemeinsamen Lagerung auf die Andruckrolle übertragen. Stattdessen wird vorgeschlagen, die Andruckrolle über eine Schwinge, ein eigenes Feder- und/oder Dämpferelement und/oder ein längsverstellbares Koppelglied mit dem Maschinenrahmen oder einem ortsfest mit dem Maschinenrahmen verbundenen Bauteil zu verbinden. Über die Schwinge, das Feder- und/oder Dämpferelement oder das längsverstellbare Koppelglied kann die Andruckrolle eigenständige Auf- und Abwärtsbewegungen ausführen, um sich an Höhenunterschiede in der Säfurche anzupassen. Die Andruckrolle wird dabei vom Maschinenrahmen oder einem anderen, ortsfest am Maschinenrahmen befestigten Bauteil gehalten. Über die Schwinge, das eigene Feder- und/oder Dämpferelement und/oder das längsverstellbare Koppelglied kann der Druck auf die Andruckrolle je nach Einstellung verringert oder erhöht werden. Die Einstellung und die Steuerung/Regelung können je nach Ausführung der Sämaschine motorisch und fernbetätigbar erfolgen.

Nach einer Ausgestaltung der Erfindung ist die Förderleitung zur Beförderung des Saatguts von der Saatgutvereinzelungsvorrichtung zu einer Ablagezone fest mit der Saatgutvereinzelungsvorrichtung und der Andruckrolle verbunden. Die Förderleitung ist durch die feste Verbindung mit diesen beiden Komponenten zumindest weitgehend stoßfrei gehalten und ist auch kaum Lageveränderungen ausgesetzt. Die Saatgutkörner können dadurch sehr genau und präzise ohne größere Laufzeitenunterschiede und ohne Stoßimpulse, durch die die Schussbahn der beförderten Saatgutkörner beeinflusst werden könnte, befördert werden.

Nach einer Ausgestaltung der Erfindung ist die Abgabeöffnung der Förderleitung in einer festen Position zur Andruckrolle gehalten. Durch die feste Zuordnung der Position der Abgabeöffnung zur Andruckrolle verändert sich der Punkt, auf den die vereinzelten Saatgutkörner geschossen werden, von Schuss zu Schuss kaum. Es ergibt sich eine hohe Schussgenauigkeit mit einer daraus resultierenden gleichmäßigen und reihenförmigen Ablage der Saatgutkörner.

Nach einer Ausgestaltung der Erfindung sind die Saatgutvereinzelungsvorrichtung, die Andruckrolle und die Förderleitung als eine gemeinsame Baugruppe beweglich mit dem Maschinenrahmen verbunden. Durch die Kombination der Saatgutvereinzelungsvorrichtung, der Andruckrolle und der Förderleitung zu einer gemeinsamen Baugruppe können die Abstände und die räumliche und funktionale Zuordnung der jeweiligen Komponenten zueinander optimal gestaltet werden. Die Abgabesituation der vereinzelten Saatgutkörner aus der Saatgutvereinzelungsvorrichtung in die Transportleitung und die Situation beim Ausschießen der Saatgutkörner aus der Abgabeöffnung in Richtung der Andruckrolle bleibt in einer gemeinsamen Baugruppe immer gleich, so dass diese optimal gestaltet werden kann. Innerhalb der Baugruppe kann die Länge und Dimensionierung der Förderleitung genau an die räumlichen Verhältnisse im Bereich der Baugruppe angepasst werden. Die Förderleitung muss auch nicht mehr an sich ändernde geometrische Verhältnisse anpassbar ausgestaltet werden. Sie kann vielmehr als eine feste Förderleitung mit festen Anbindungen an die Baugruppe ausgeführt sein, was vorteilhaft ist für die Schussgenauigkeit der Vorrichtung.

Nach einer Ausgestaltung der Erfindung sind die Saatgutvereinzelungsvorrichtung, die Andruckrolle und die Förderleitung als eine gemeinsame Baugruppe nicht beweglich mit dem Maschinenrahmen, sondern beweglich mit dem Furchenöffner verbunden. Die Verbindung kann beispielsweise durch eine gelenkige Verbindung oder eine Koppelstange hergestellt sein. Durch die Verbindung der Baugruppe mit dem Furchenöffner können die Freiheitsgrade eingeschränkt sein, mit denen sich die Baugruppe bewegen kann. Es kann vorteilhaft sein, die Freiheitsgrade für die Beweglichkeit einzuschränken, um die Baugruppe bei ihrer verbleibenden Beweglichkeit nahe am Furchenöffner zu halten oder zu große Auf- und Abwärtsbewegungen zu vermeiden, wobei das auch für den Furchenöffner gilt. Die Verbindung kann auch dazu dienen, eine Seitenführung der Baugruppe darzustellen.

Nach einer Ausgestaltung der Erfindung weist die Andruckrolle eine elastische Oberfläche auf. Die elastische Oberfläche ist vorteilhaft, um überschüssige Bewegungsenergie abzubauen, mit der Saatgutkörner auf den Außenumfang der Andruckrolle geschossen werden. Die Andruckrolle kann beispielsweise mit einem Hohl- oder Vollgummireifen ausgestattet sein, der eine elastische Oberfläche aufweist. Anstelle von Gummi können auch andere Materialien verwendet werden, die weich genug sind, um ein aus der Förderleitung ausgeschossenes Saatgutkorn zunächst ganz oder teilweise in das Material eindringen zu lassen, dabei aber auch ausreichend Rückstellkräfte aufbauen, um das Saatgutkorn zurückzuwerfen und sich in die Ausgangsform zurück zu verwandeln. Dadurch neigen die Saatgutkörner weniger dazu, beim Aufprall auf die Andruckrolle seitlich zu verspringen. Die Ablagegenauigkeit wird durch diese Maßnahme verbessert.

Nach einer Ausgestaltung der Erfindung verfügt die Saatgutvereinzelungsvorrichtung über zumindest ein Dosierelement, welches das Saatgut mittels eines pneumatischen Druckgefälles dosiert oder vereinzelt. Das pneumatische Druckgefälle ist vorteilhaft, weil es die Saatgutkörner gut beschleunigt und in der Saatgutvereinzelungsvorrichtung verteilt. Die Vereinzelungsgenauigkeit ist bei pneumatischen Systemen sehr hoch.

Nach einer Ausgestaltung der Erfindung sind die Saatgutvereinzelungsvorrichtung und/oder die Förderleitung mit einem pneumatischen Druckgefälle beaufschlagt, welches den Transport des Saatgutes in die Furche beeinflusst. Bei pneumatischen Vereinzelungs- und Fördersystemen ergeben sich besonders hohe Fördergeschwindigkeiten für das Saatgut, die auch hohe Arbeitsgeschwindigkeiten der Sämaschine ermöglichen. Die Ablagegenauigkeit ist mit diesen Systemen sehr hoch, weil sich Bewegungen der Vereinzelungs- und Förderorgane über die kurze Förderzeit hinweg kaum in Unterschieden in der Ablagegenauigkeit auswirken.

Nach einer Ausgestaltung der Erfindung sind die Förderleitung und die Abgabeöffnung so räumlich angeordnet, dass sie das Saatgut unmittelbar vor, auf die Umfangsfläche der Andruckrolle oder die Umfangsfläche der Andruckrolle tangierend auswerfen. Die Andruckrolle fängt dadurch aus der Abgabeöffnung ausgeworfene Saatgutkörner mit ihrer Umfangsfläche auf und lenkt diese in die Säfurche um, so dass diese nicht so leicht seitlich oder in Längsrichtung der Furche verspringen können. Die Ablagegenauigkeit wird durch diese Lösung verbessert.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht auf eine Sämaschine,
- Fig. 2:: eine Seitenansicht auf eine erste Version der Abstützung der Saatgutvereinzelungsvorrichtung auf der Andruckrolle, bei der sich die Baugruppe in einer mittleren Höhenlage befindet,
- Fig. 3:: die in Fig. 2 gezeigte Version, die sich in einer oberen Höhenlage befindet,
- Fig. 4:: die in Fig. 2 gezeigte Version, die sich in einer unteren Hö-henlage befindet,
- Fig. 5:: die Anlenkung der Baugruppe an den Maschinenrahmen,
- Fig. 6:: die Anlenkung des Furchenöffners an den Maschinenrahmen,
- Fig. 7:: eine Seitenansicht auf eine zweite Version der Abstützung der Saatgutvereinzelungsvorrichtung auf der Andruckrolle,

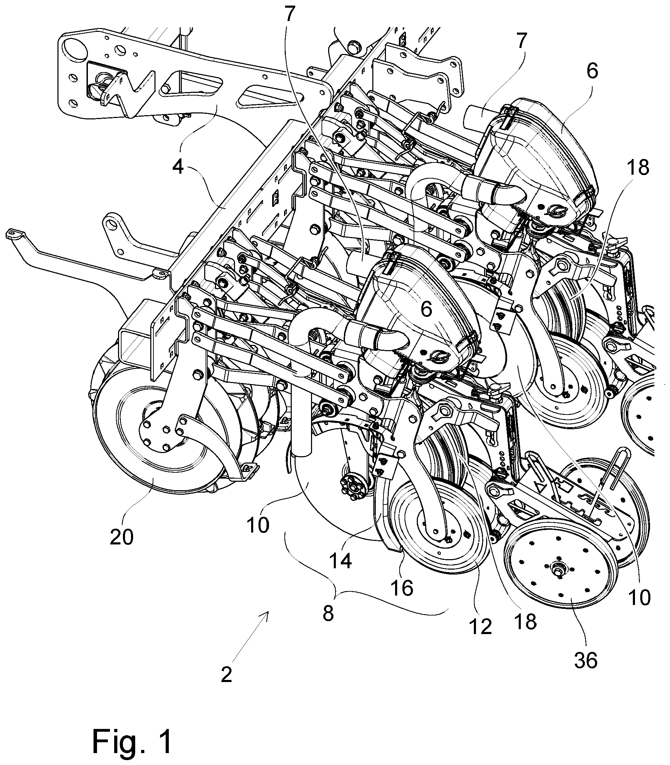

In Fig. 1 ist eine Ansicht auf eine Sämaschine 2 aus einer Ansicht von schräg hinten gezeigt. Die Sämaschine 2 verfügt über einen Maschinenrahmen 4, an den mehrere Saatgutvereinzelungsvorrichtungen 6 angebunden sind, die jeweils einer Drilleinheit 8 zugeordnet sind. Die Drilleinheiten 8 bestehen zumindest aus einem Furchenöffner 10, einer Andruckrolle 12 und einer Förderleitung 14, die die in der Saatgutvereinzelungsvorrichtung 6 vereinzelten Saatgutkörner aus der Abgabeöffnung 16 in die Säfurche leitet. Im gezeigten Ausführungsbeispiel bestehen die Furchenöffner 10 aus Doppelscheibenscharen, die in einer angewinkelten Stellung V-förmig zueinander gehalten sind und an ihrer Unterseite in den Ackerboden eintauchen, um dort eine Säfurche zu öffnen. Die Furchenöffner 10 können mit einer Tiefenführungsvorrichtung 18 verbunden sein, die im Ausführungsbeispiel aus einem Rad besteht, das zur Abtastung der Bodenkontur seitlich neben der Säfurche über den Ackerboden rollt. Im gezeigten Beispiel sind einer Tiefenführungsrolle 18 beidseitig jeweils ein Furchenöffner 10 zugeordnet. Den Furchenöffnern 10 können zusätzlich noch Packerwalzen 20 oder andere Aggregate vorgeordnet sein, die den Boden für die Aussaat vorbereiten und gegebenenfalls noch Dünger in den Boden einbringen, bevor die Saatgutkörner in die Säfurche abgelegt werden. Im vorliegendem Beispiel werden durch die Ringe der Packerwalzen 20 Bodenrillen vorgeformt und vorverdichtet, in welche die Furchenöffner 10 die Endfurchenform zur Saatgutablage formen.

Die Saatgutvereinzelungseinrichtung 6 ist mit einer Einlassöffnung 7 zur Zufuhr von Saatgut und/oder dem Aufbau eines pneumatischen Druckgefälles versehen. Mittels eines nicht dargestellten Gebläses oder Verdichters wird ein Druckgefälle zur Kornvereinzelung und Unterstützung des Transportes der Saatgutkörner erzeugt.

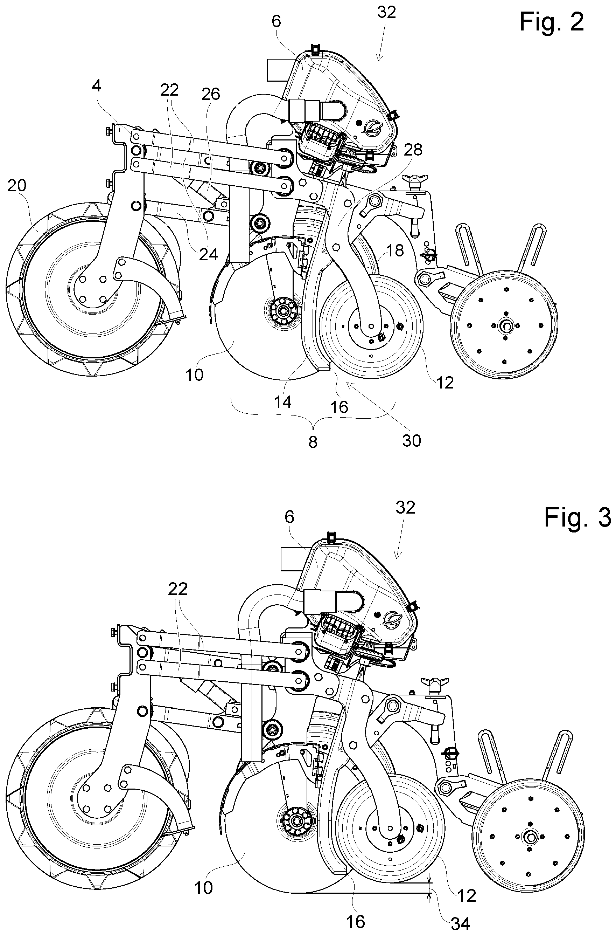

In Fig. 2 ist eine Seitenansicht auf eine erste Version der Abstützung der Saatgutvereinzelungsvorrichtung 6 auf der Andruckrolle 14 gezeigt, bei der sich die aus diesen Maschinenelementen sowie der Förderleitung 12 bestehende Baugruppe 32 in einer mittleren Höhenlage befindet. Die Baugruppe 32 ist über Lenkerarme 22 mit dem Maschinenrahmen 4 verbunden, während der Furchenöffner 10 über Lenkerarme 24 mit dem Maschinenrahmen 4 verbunden ist. Die Auf- und Abbewegungen des Furchenöffners 10 können durch Tiefenführungsrolle 18 nach unten begrenzt und durch den Energiespeicher 26 gedämpft und/oder mit einer Kraft beaufschlagt werden. Die Baugruppe 32 und der Furchenöffner 10 sind also unabhängig voneinander in vertikaler Richtung beweglich. Dabei ist die Saatgutvereinzelungsvorrichtung 6 über das Stützelement 28 auf der Andruckrolle 12 abgestützt. Das äußere der beiden Scheibenschare des Furchenöffners 10 ist zur verbesserten Darstellung nicht gezeigt.

Das Stützelement 28 ist im Ausführungsbeispiel starr ausgebildet und verbindet die Saatgutvereinzelungsvorrichtung 6 und die Andruckrolle 12 miteinander. Außerdem ist noch die Förderleitung 14 mit dem Stützelement 28 verbunden. Durch die starre Verbindung dieser Bauteile miteinander ergibt sich eine feste räumliche Zuordnung, durch die die Abgabeöffnung 16, durch die die Saatgutkörner aus der Förderleitung austreten, unabhängig von der Höhenlage der Baugruppe 32 im Verhältnis zum Furchenöffner 10 immer in einer gleich bleibenden räumlichen Lage zur Andruckrolle 12 bleibt. Daraus ergibt sich eine sehr hohe Ablagegenauigkeit der Saatgutkörner in die Ablagezone 30, die die Sämaschine erreicht.

In Fig. 3 ist die in Fig. 2 gezeigte erste Version der Abstützung der Saatgutvereinzelungsvorrichtung 6 auf der Andruckrolle 12 in einer oberen Höhenlage dargestellt. Die Lenkerarme 22 sind nach oben hin ausgeschwenkt, so dass die Andruckrolle 12 mit ihrem tiefsten Punkt um den Höhenunterschied 34 höher liegt als der unterste Punkt des Furchenöffners 10. Durch die Schwenkbewegung der Lenkerarme 22 hat sich die Baugruppe 32 insgesamt nach oben hin bewegt. Die räumliche Zuordnung der Saatgutvereinzelungsvorrichtung 6 zur Förderleitung 14 und der Andruckrolle 12 hat sich dabei aber nicht verändert.

An dieser Stelle sei darauf hingewiesen, dass die Auslenkungsbewegung der Lenkerarme 22 ebenfalls durch einen Energiespeicher gedämpft werden kann, der auf die Lenkerarme 22 wirkt. Ein solcher Energiespeicher für die Lenkerarme 22 und die Baugruppe 32 ist in dem gezeigten Ausführungsbeispiel aber nicht näher dargestellt.

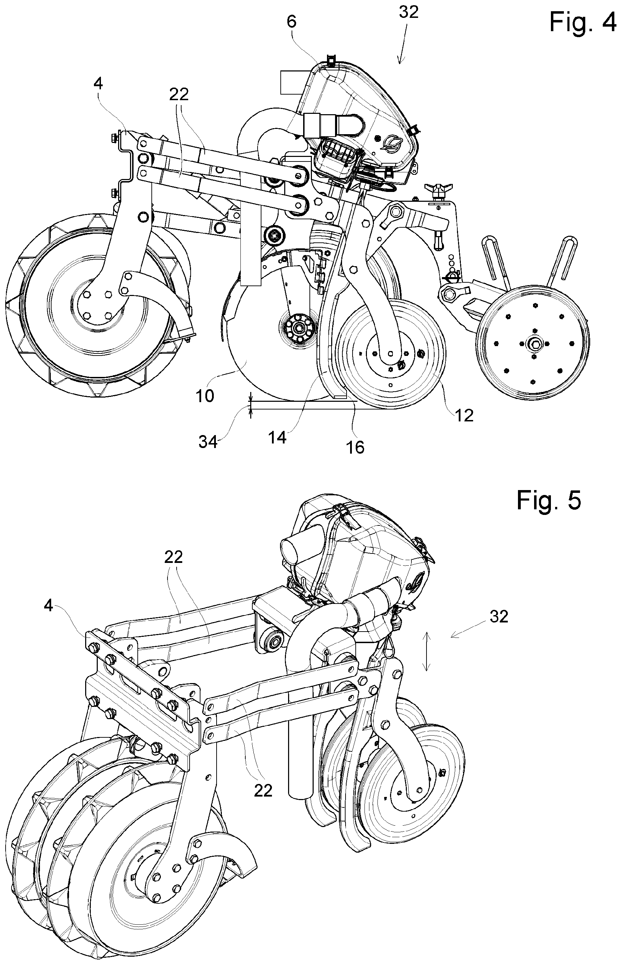

In Fig. 4 ist die in Fig. 2 gezeigte erste Version der Abstützung der Saatgutvereinzelungsvorrichtung 6 auf der Andruckrolle 12 in einer unteren Höhenlage dargestellt. Die Lenkerarme 22 sind nach unten hin ausgeschwenkt, so dass die Andruckrolle 12 mit ihrem tiefsten Punkt um den Höhenunterschied 34 tiefer liegt als der unterste Punkt des Furchenöffners 10. Durch die Schwenkbewegung der Lenkerarme 22 hat sich die Baugruppe 32 insgesamt nach unten hin bewegt. Die räumliche Zuordnung der Saatgutvereinzelungsvorrichtung 6 zur Förderleitung 14 und der Andruckrolle 12 hat sich dabei aber auch in dieser Schwenkstellung nicht verändert. Die Saatgutkörner können also unabhängig von der Höhenlage des Furchenöffners 10 immer auf einen gleichen Punkt im Verhältnis zur Andruckrolle 12 aus der Förderleitung 14 abgegeben werden. Zur Vermeidung von Kollisionen der Förderleitung 14 mit dem Boden bzw. durch den Furchenöffner 10 erzeugten Furchengrund kann ein Anschlag vorgesehen sein, welcher die Schwenkbewegung der Lenkerarme 22 beziehungsweise der Baugruppe 32 insgesamt relativ zum Maschinenrahmen 4 oder zum Furchenöffner 10 nach unten begrenzt, und zwar derart, dass das untere Ende der Förderleitung 14 den tiefsten Punkt des Furchenöffners 10 nicht unterschreitet. Der Anschlag kann als Widerlager, als Zugkette oder Zugseil, Strebe oder andere, ein maximales oder minimales Einbaumaß begrenzende Elemente ausgebildet sein.

In Fig. 5 ist die Anlenkung der Baugruppe 32 an den Maschinenrahmen 4 in einer perspektivischen Ansicht gezeigt. Über die Lenkerarme 22, die nach Art eines Parallelogramms ausgebildet sind, kann die Baugruppe 32 aus der gezeigten Position wie durch den Doppelpfeil angedeutet nach oben oder unten gegenüber dem Maschinenrahmen 4 verschwenken.

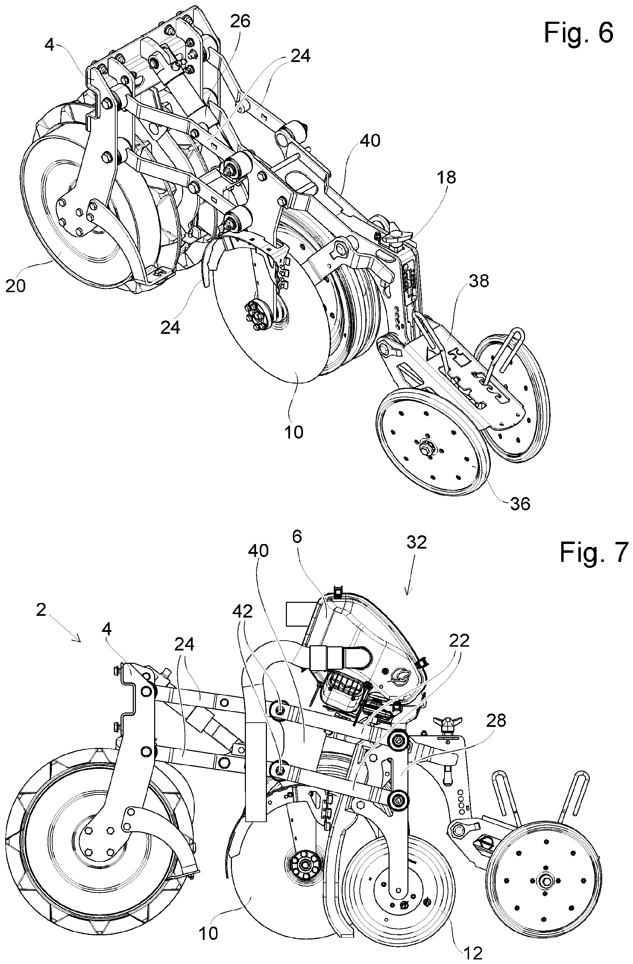

In Fig. 6 ist die Anlenkung des Furchenöffners 10 an den Maschinenrahmen in einer perspektivischen Ansicht gezeigt. In dieser Ansicht sind die Lenkerarme 24 gut erkennbar, die ebenfalls als Parallelogramm am Maschinenrahmen 4 befestigt sind. Aus dieser Ansicht ist gut erkennbar, dass die Lenkerarme 24 unabhängig von den in Fig. 5 dargestellten Lenkerarmen 22 beweglich sind. Im Ausführungsbeispiel sind an den Furchenöffner 10 noch Zustreichräder 36 angehängt. Der Lagerbock 38, an dem die Zustreichräder 36 gelagert sind, ist über ein Zwischengelenk mit dem Rahmen 40 verbunden, an dem die Scheiben des Furchenöffners 10 gelagert sind. Die Auf- und Abbewegungen des Furchenöffners 10 können durch Tiefenführungsrolle 18 nach unten begrenzt und durch den Energiespeicher 26 gedämpft und/oder mit einer Kraft beaufschlagt werden.

Die Fig. 7 zeigt eine Seitenansicht auf eine zweite Version der Abstützung der Saatgutvereinzelungsvorrichtung 6 auf der Andruckrolle 12. Die Lenkerarme 22 sind in dieser Version maschinenseitig nicht am Maschinenrahmen 4, sondern an einer gemeinsamen Achse 42 mit den Lenkerarmen 24 und dem Rahmen 40 verbunden. An den der Baugruppe 32 zugewandten Enden der Lenkerarme 22 sind diese mit dem Stützelement 28 verbunden. Bei dieser Version bewegt sich die Baugruppe 32 ebenfalls unabhängig vom Furchenöffner 10, weil die Freiheitsgrade, um die die Lenkerarme 22 beweglich sind, so groß sind, dass diese während des Betriebs der Sämaschine 2 nicht vollständig ausgeschöpft werden. Genauso verfügen auch die Lenkerarme 24 um so große Freiheitsgrade, dass diese ebenfalls während des Normalbetriebs an die Anschläge anschlagen werden. Wenn sich die Lenkerarme 24 nach oben bewegen, können sich die Lenkerarme 22 gleichzeitig nach oben oder unten bewegen oder ihre relative Lage zu den Lenkerarmen 24 beibehalten, und andersherum. Das gilt entsprechend auch für die Lenkerarme 24, wenn sich die Lenkerarme 22 nach oben oder unten bewegen. Auch hier kann zur Vermeidung von Kollisionen der Förderleitung 14 mit dem Boden bzw. durch den Furchenöffner 10 erzeugten Furchengrund ein Anschlag vorgesehen sein, welcher die Schwenkbewegung der Lenkerarme 22 oder des Stützelementes 28 beziehungsweise der Baugruppe 32 insgesamt relativ zum Furchenöffner 10 nach unten begrenzt, und zwar derart, dass das untere Ende der der Förderleitung 14 den tiefsten Punkt des Furchenöffners 10 nicht unterschreitet. Der Anschlag kann als Widerlager, als Zugkette oder Zugseil, Strebe oder andere, ein maximales oder minimales Einbaumaß begrenzende Elemente ausgebildet sein.

Abweichend von der in Fig. 7 gezeigten Version können die Lenkerarme 22 über eine Achse 42 natürlich auch nur an den Lenkerarmen 24 oder am Rahmen 40 befestigt sein. Für all diese Versionen gelten die vorstehend beschriebenen Vorteile entsprechend.

Die Erfindung ist nicht auf die vorstehenden Ausführungsbeispiele beschränkt, sondern wird durch die nachstehenden Ansprüche definiert.

### Bezugszeichenliste

- 2: Sämaschine
- 4: Maschinenrahmen
- 6: Saatgutvereinzelungsvorrichtung
- 8: Drilleinheit
- 7.: Einlassöffnung
- 10: Furchenöffner
- 12: Andruckrolle
- 14: Förderleitung
- 16: Abgabeöffnung
- 18: Tiefenführungsvorrichtung
- 20: Packerwalze
- 22: Lenkerarm (Andruckrolle)
- 24: Lenkerarm (Furchenöffner)
- 26: Energiespeicher
- 28: Stützelement
- 30: Ablagezone
- 32: Baugruppe
- 34: Höhenunterschied
- 36: Zustreichrad
- 38: Lagerbock
- 40: Rahmen
- 42: Achse

## Patentansprüche

1. Landwirtschaftliche Sämaschine (2) mit einem Maschinenrahmen (4) und einer Mehrzahl von nebeneinander am Maschinenrahmen (4) angeordneten Saatgutvereinzelungsvorrichtungen (6) und Drilleinheiten (8), wobei die Drilleinheiten (8) zumindest einen Furchenöffner (10), eine Förderleitung (14) zur Beförderung des Saatguts von der Saatgutvereinzelungsvorrichtung (6) zu einer Ablagezone (30) mit einer bodennah angeordneten Abgabeöffnung (16) und eine Andruckrolle (12) aufweisen, und der zumindest eine Furchenöffner (10), die Abgabeöffnung (16) und die Andruckrolle (12) in dieser Arbeitsabfolge zueinander in der Drilleinheit (8) angeordnet sind, wobei
die Andruckrolle (12) über Lenkerarme (22) mit dem Maschinenrahmen (4) und/oder Rahmenteilen des Furchenöffners (10) und/oder Lenkerarmen (24) zur Führung des Furchenöffners (10) so verbunden ist, dass diese vom Furchenöffner (10) unabhängig höhenbeweglich ist, und dass
die Saatgutvereinzelungsvorrichtung (6) zumindest teilweise oder vollständig direkt auf der Andruckrolle (12) abgestützt ist, **dadurch gekennzeichnet, dass**
die Saatgutvereinzelungsvorrichtung (6) als Doppel- oder Mehrfachvereinzelungsvorrichtung ausgeführt ist, wobei der Saatgutvereinzelungsvorrichtung (6) zwei oder mehrere Furchenöffner (10) zugeordnet sind.

2. Sämaschine (2) nach Anspruch 1, **dadurch gekennzeichnet, dass** dem Furchenöffner (10) eine Tiefenführungsvorrichtung (18) zugeordnet ist.

3. Sämaschine (2) nach Anspruch 1 oder 2, **dadurch gekennzeichnet, dass** dem Furchenöffner (10) ein Energiespeicher (26) zur Beaufschlagung mit einer vorzugsweise vertikalen Kraft zugeordnet ist.

4. Sämaschine (2) nach Anspruch 3, **dadurch gekennzeichnet, dass** der Energiespeicher (26) einstell- oder regelbar ausgebildet ist.

5. Sämaschine (2) nach einem der vorherigen Ansprüche, **dadurch gekennzeichnet, dass** die Furchenöffner (10) unabhängig voneinander beweglich am Maschinenrahmen (4) aufgehängt sind.

6. Sämaschine (2) nach einem der vorherigen Ansprüche, **dadurch gekennzeichnet, dass** den Furchenöffnern (10) jeweils Andruckrollen (12) zugeordnet sind, welche über eine gemeinsame Achse (42) und/oder ein gemeinsames Stützelement (28) mit der Saatgutvereinzelungsvorrichtung (6) verbunden sind.

7. Sämaschine (2) nach Anspruch 6, **dadurch gekennzeichnet, dass** das Stützelement (28) starr ausgebildet ist.

8. Sämaschine (2) nach Anspruch 6 oder 7, **dadurch gekennzeichnet, dass** das Stützelement (28) ein Feder- und/oder Dämpferelement aufweist.

9. Sämaschine (2) nach einem der vorhergehenden Ansprüche, **dadurch gekennzeichnet, dass** die Andruckrolle (12) über eine Schwinge, ein Feder- und/oder Dämpferelement und/oder ein längsverstellbares Koppelglied mit dem Maschinenrahmen (4) oder einem ortsfest mit dem Maschinenrahmen (4) verbundenen Bauteil verbunden ist.

10. Sämaschine (2) nach einem der vorhergehenden Ansprüche, **dadurch gekennzeichnet, dass** die Förderleitung (14) zur Beförderung des Saatguts von der Saatgutvereinzelungsvorrichtung (6) zu einer Ablagezone (30) fest mit der Saatgutvereinzelungsvorrichtung (6) und der Andruckrolle (12) verbunden ist.

11. Sämaschine (2) nach einem der vorhergehenden Ansprüche, **dadurch gekennzeichnet, dass** die Abgabeöffnung (16) der Förderleitung (14) in einer festen Position zur Andruckrolle (12) gehalten ist.

12. Sämaschine (2) nach einem der vorhergehenden Ansprüche, **dadurch gekennzeichnet, dass** die Saatgutvereinzelungsvorrichtung (6), die Andruckrolle (12) und die Förderleitung (14) als eine gemeinsame Baugruppe (32) beweglich mit dem Maschinenrahmen (4) verbunden sind.

13. Sämaschine (2) nach einem der Ansprüche 1 bis 11, **dadurch gekennzeichnet, dass** die Saatgutvereinzelungsvorrichtung (6), die Andruckrolle (12) und die Förderleitung (14) als eine gemeinsame Baugruppe (32) nicht beweglich mit dem Maschinenrahmen (4), sondern beweglich mit dem Furchenöffner (10) verbunden sind.

14. Sämaschine (2) nach einem der vorhergehenden Ansprüche, **dadurch gekennzeichnet, dass** die Andruckrolle (12) eine elastische Oberfläche aufweist.

15. Sämaschine (2) nach einem der vorhergehenden Ansprüche, **dadurch gekennzeichnet, dass** die Saatgutvereinzelungsvorrichtung (6) über zumindest ein Dosierelement verfügt, welches das Saatgut mittels eines pneumatischen Druckgefälles dosiert oder vereinzelt.

16. Sämaschine (2) nach einem der vorhergehenden Ansprüche, **dadurch gekennzeichnet, dass** die Saatgutvereinzelungsvorrichtung (6) und/oder die Förderleitung (14) mit einem pneumatischen Druckgefälle beaufschlagt sind, welches den Transport des Saatgutes in die Furche beeinflusst.

17. Sämaschine (2) nach einem der vorhergehenden Ansprüche, **dadurch gekennzeichnet, dass** die Förderleitung (14) und die Abgabeöffnung (16) so räumlich angeordnet sind, dass sie das Saatgut unmittelbar vor, auf die Umfangsfläche der Andruckrolle (12) oder die Umfangsfläche der Andruckrolle (12) tangierend auswerfen.

## Claims

1. An agricultural seeding machine (2) having a machine frame (4) and a plurality of seed singulation devices (6) and drill units (8) arranged on the machine frame (4) next to one another, wherein the drill units (8) comprise at least one furrow opener (10), a conveying line (14) for conveying the seed from the seed singulation device (6) to a planting zone (30) with an output opening (16) arranged near the ground and a pressure roller (12), and the at least one furrow opener (10), the output opening (16) and the pressure roller (12) are arranged in the drill unit (8) in this work sequence relative to one another,
wherein the pressure roller (12) is connected via link arms (22) to the machine frame (4) and/or frame parts of the furrow opener (10) and/or link arms (24) for guiding the furrow opener (10) so that the same is height-moveable independently of the furrow opener (10), and that the seed singulation device (6) is at least partly or completely supported directly on the pressure roller (12),
**characterised in that**
the seed singulation device (6) is embodied as double or multiple singulation device, wherein the seed singulation device (6) is assigned two or more furrow openers (10).

2. The seeding machine (2) according to Claim 1, **characterised in that** the furrow opener (10) is assigned a depth guiding device (18).

3. The seeding machine (2) according to Claim 1 or 2, **characterised in that** the furrow opener (10) is assigned an energy store (26) for being subjected to a preferentially vertical force.

4. The seeding machine (2) according to Claim 3, **characterised in that** the energy store (26) is designed so as to be adjustable or controllable.

5. The seeding machine (2) according to any one of the preceding claims, **characterised in that** the furrow openers (10) are suspended from the machine frame (4) so as to be moveable independently of one another.

6. The seeding machine (2) according to any one of the preceding claims, **characterised in that** the furrow openers (10) are each assigned pressure rollers (12) which, via a common axis (42) and/or a common support element (28), are connected to the seed singulation device (6).

7. The seeding machine (2) according to Claim 6, **characterised in that** the support element (28) is designed rigidly.

8. The seeding machine (2) according to Claim 6 or 7, **characterised in that** the support element (28) comprises a spring and/or damper element.

9. The seeding machine (2) according to any one of the preceding claims, **characterised in that** the pressure roller (12) is connected via a swing arm, a spring and/or damper element and/or a longitudinally adjustable coupling link to the machine frame (4) or to a component that is fixed to the machine frame (4).

10. The seeding machine (2) according to any one of the preceding claims, **characterised in that** the conveying line (14) for conveying the seed from the seed singulation device (6) to a planting zone (30) is fixed to the seed singulation device (6) and the pressure roller (12).

11. The seeding machine (2) according to any one of the preceding claims, **characterised in that** the output opening (16) of the conveying line (14) is held in a fixed position relative to the pressure roller (12).

12. The seeding machine (2) according to any one of the preceding claims, **characterised in that** the seed singulation device (6), the pressure roller (12) and the conveying line (14) are moveably connected to the machine frame (4) as a common assembly (32).

13. The seeding machine (2) according to any one of the Claims 1 to 11, **characterised in that** the seed singulation device (6), the pressure roller (12) and the conveying line (14) as a common assembly (32) are not moveably connected to the machine frame (4), but are moveably connected to the furrow opener (10).

14. The seeding machine (2) according to any one of the preceding claims, **characterised in that** the pressure roller (12) has an elastic surface.

15. The seeding machine (2) according to any one of the preceding claims, **characterised in that** the seed singulation device (6) has at least one metering element, which meters or singulates the seed by means of a pneumatic pressure drop.

16. The seeding machine (2) according to any one of the preceding claims, **characterised in that** the seed singulation device (6) and/or the conveying line (14) are subjected to a pneumatic pressure drop which influences the transport of the seed into the furrow.

17. The seeding machine (2) according to any one of the preceding claims, **characterised in that** the conveying line (14) and the output opening (16) are spatially arranged so that they tangentially eject the seed directly onto the circumferential surface of the pressure roller (12) or the circumferential surface of the pressure roller (12) .

## Revendications

1. Semoir agricole (2), pourvu d'un châssis de machine (4) et d'une pluralité de dispositifs de séparation (6) des semences et d'unités de semoir (8) placés côte à côte sur le châssis de machine (4), les unités de semoir (8) comportant au moins un traceur de sillons (10), un conduit de convoyage (14) destiné à convoyer la semence du dispositif de séparation (6) des semences vers une zone de dépose (30) pourvue d'un orifice de distribution (16) placé à proximité du sol et un galet presseur (12) et l'au moins un traceur de sillons (10), l'orifice de distribution (16) et le galet presseur (12) étant placés les uns par rapport aux autres selon cette séquence de travail dans les unités de semoir (8),
le galet presseur (12) étant assemblé par l'intermédiaire de bras de direction (22) avec le châssis de machine (4) et / ou avec des parties de châssis du traceur de sillons (10) et / ou avec des bras de direction (24) destinés à guider le traceur de sillons (10) de telle sorte, que ceux-ci soient déplaçables en hauteur indépendamment du traceur de sillons (10) et
que le dispositif de séparation (6) des semences soit soutenu au moins en partie ou totalement directement sur le galet presseur (12),
**caractérisé en ce que**
le dispositif de séparation (6) des semences est réalisé sous la forme d'un dispositif de séparation des semences double ou multiple, au dispositif de séparation (6) des semences étant associés deux ou plusieurs traceurs de sillons (10).

2. Semoir (2) selon la revendication 1, **caractérisé en ce qu'**au traceur de sillons (10) est associé un dispositif de guidage (18) en profondeur.

3. Semoir (2) selon la revendication 1 ou 2, **caractérisé en ce qu'**au traceur de sillons (10) est associé un accumulateur d'énergie (26), destiné à la soumission à une force, de préférence verticale.

4. Semoir (2) selon la revendication 3, **caractérisé en ce que** l'accumulateur d'énergie (26) est réalisé de manière à pouvoir être réglé ou régulé.

5. Semoir (2) selon l'une quelconque des revendications précédentes, **caractérisé en ce que** les traceurs de sillons (10) sont accrochés en étant déplaçables indépendamment les uns des autres sur le châssis de machine (4).

6. Semoir (2) selon l'une quelconque des revendications précédentes, **caractérisé en ce qu'**aux traceurs de sillons (10) sont associés respectivement des galets presseurs (12), qui par l'intermédiaire d'un axe (42) commun et / ou d'un élément de soutien (28) commun sont assemblés avec le dispositif de séparation (6) des semences.

7. Semoir (2) selon la revendication 6, **caractérisé en ce que** l'élément de soutien (28) est réalisé de manière rigide.

8. Semoir (2) selon la revendication 6 ou 7, **caractérisé en ce que** l'élément de soutien (28) comporte un élément à ressort et / ou un élément amortisseur.

9. Semoir (2) selon l'une quelconque des revendications précédentes, **caractérisé en ce que** le galet presseur (12) est associé par l'intermédiaire d'un bras oscillant, d'un élément à ressort et / ou d'un élément amortisseur et / ou d'un organe d'accouplement réglable en longueur avec le châssis de machine (4) ou avec un élément constitutif assemblé de manière stationnaire avec le châssis de machine (4).

10. Semoir (2) selon l'une quelconque des revendications précédentes, **caractérisé en ce que** le conduit de convoyage (14), destiné à convoyer les semences du dispositif de séparation (6) des semences vers une zone de dépose (30) est fixement assemblé avec le dispositif de séparation (6) des semences et avec le galet presseur (12).

11. Semoir (2) selon l'une quelconque des revendications précédentes, **caractérisé en ce que** l'orifice de distribution (16) du conduit de convoyage (14) est maintenu dans une position fixe par rapport au galet presseur (12).

12. Semoir (2) selon l'une quelconque des revendications précédentes, **caractérisé en ce que** le dispositif de séparation (6) des semences, le galet presseur (12) et le conduit de convoyage (14) sont assemblés sous la forme d'un ensemble (32) commun, de manière déplaçable avec le châssis de machine (4).

13. Semoir (2) selon l'une quelconque des revendications 1 à 11, **caractérisé en ce que** le dispositif de séparation (6) des semences, le galet presseur (12) et le conduit de convoyage (14) sont assemblés sous la forme d'un ensemble (32) commun, de manière non déplaçable avec le châssis de machine (4), mais de manière déplaçable avec le traceur de sillons (10).

14. Semoir (2) selon l'une quelconque des revendications précédentes, **caractérisé en ce que** le galet presseur (12) comporte une surface élastique.

15. Semoir (2) selon l'une quelconque des revendications précédentes, **caractérisé en ce que** le dispositif de séparation (6) des semences dispose d'au moins un élément de dosage, lequel dose ou sépare les semences au moyen d'une différence de pression pneumatique.

16. Semoir (2) selon l'une quelconque des revendications précédentes, **caractérisé en ce que** le dispositif de séparation (6) des semences et / ou le conduit de convoyage (14) sont soumis à une différence de pression pneumatique, laquelle influence le transport des semences dans le sillon.

17. Semoir (2) selon l'une quelconque des revendications précédentes, **caractérisé en ce que** le conduit de convoyage (14) et l'orifice de distribution (16) sont placés dans l'espace de sorte à éjecter les semences tangentiellement, directement à l'avant sur la surface circonférentielle du galet presseur (12) ou sur la surface circonférentielle du galet presseur (12).
